# EUROPÄISCHE PATENTANMELDUNG

(11) **EP 0 777 230 A1**
(43) Veröffentlichungstag der Anmeldung: **04.06.1997**
(21) Anmeldenummer: 96810837.3
(22) Anmeldetag: 02.12.1996
(51) Int. Cl.: G11B 27/28, G11B 27/11, G11B 23/36, G11B 27/32, G11B 27/34

(54) **CDs enthaltend zusätzliche Textinformation**

(30) Priorität: 04.12.1995 EP 95119033
(71) Anmelder: Zwickl, Markus, 4104 Oberwil (CH)
(72) Erfinder: Zwickl, Markus, 4104 Oberwil (CH)

(57) **Zusammenfassung**

Die vorliegende Erfindung beschreibt eine Compact Disk (CD), dadurch gekennzeichnet, daß auf der CD zusätzliche Textinformationen zu den gespeicherten Musikstücken in einem Dateiformat abgespeichert sind, das es gestattet, die Textinformationen in den Speicher eines Heimcomputers einzulesen und mit Hilfe eines Anwendungsprogramms zu verarbeiten.

## Beschreibung

Die vorliegende Erfindung fällt in das Gebiet der Compact Disks (CDs) und betrifft CDs, welche zusätzlich zu den auf Musik-CDs enthaltenen Musiktiteln auch die beim Kauf einer Musik-CD üblicherweise mit der Verpackung mitgelieferten Textinformationen auf der CD abgespeichert enthalten, und zwar in einem Dateiformat, welches einem Anwendungsprogramm die Verarbeitung dieser Textinformationen auf einem Heimcomputer ermöglicht. Diese Informationen können dann mit Hilfe eines CD-ROM Laufwerks in den Speicher eines Heimcomputers eingelesen, als Text auf einem Bildschirm oder Drucker wiedergegeben und gegebenenfalls weiterverarbeitet werden.

Musik-CDs sind optische Speichermedien für Musikstücke, denen ein den Schallplatten ähnliches Prinzip zugrunde liegt. Musikinformationen sind als Strukturmuster codiert, aus denen mit Hilfe einer Abspieleinheit die Originalinformationen zurückgewonnen werden können. Im Unterschied zur Schallplatte, auf der die Informationen analog abgespeichert sind, wird das Muster berührungslos durch Laserlicht abgelesen. Das Strukturmuster ist in eine Kunststoffplatte eingeprägt und kann nicht verändert werden. Üblicherweise werden die Musikinformationen zu den einzelnen Musikstücken hintereinander in sogenannten Audio-Tracks abgelegt.

Seit einiger Zeit werden CDs auch außerhalb der Unterhaltungselektronik als gewöhnliche Datenspeicher eingesetzt. Für diese Art der Datenspeicherung hat sich die Bezeichnung CD-ROM eingebürgert. Das Aufzeichnungs- und Leseverfahren entspricht im wesentlichen dem von Musik-CDs. Die gespeicherten Daten sind im Audio-Track Nr. 1 abgelegt. Andere Tracks existieren in der Regel nicht.

Eine besondere Form der CDs sind die Mixed Mode CDs, welche eine Kombination von Musik-CD und CD-ROM darstellen. Sie speichern sowohl Musikinformation als auch gewöhnliche Daten. Letztere werden z.B. im Audio-Track Nr. 1 und die Musikinformationen in den übrigen Tracks abgespeichert. Eine andere Variante der Mixed Mode CDs ist die CD-Extra (CD-Plus, Enhanced-CD, CDE), welche auf einer CD die Eigenschaften sowohl einer Musik-CD als auch einer CD-ROM verbindet. Sie wird mit Hilfe eines als Pre/Mastering bezeichneten Verfahrens hergestellt. Wird die CD-Extra in ein CD-ROM Laufwerk eingelegt, so werden die gespeicherten Daten nicht wie im CD Player von innen nach aussen abgelesen, sondern vom Aussenrand der CD nach innen. Mixed Mode CDs finden allgemein Anwendung im Rahmen des Multimedia Konzepts, das die Integration von Informationen aus verschiedenen Medien anstrebt.

Es ist üblich, daß den Verpackungen von Musik-CDs Textinformationen beigefügt sind, die vor allem die gespeicherten Musikstücke betreffen. Beispiele für solche Informationen sind der Titel der CD, die einzelnen Liedertitel, die Dauer der Musikstücke, die Namen des oder der Interpreten, die Position eines Titels auf der CD etc.

Bei Musikliebhabem, die über größere Sammlungen von Musik-CDs verfügen, besteht ein großes Interesse, diese Informationen betreffend ihre Musik-CDs zentral zu erfassen. Datenbankprogramme für Heimcomputer aber auch Textverarbeitungs- und Tabellenkalkulationsprogramme eignen sich für diesen Zweck gut. Sind die Daten einmal erfasst und die CDs mit Laufnummem durchnummeriert, ist es nicht mehr nötig sie zusammen mit den voluminösen Verpackungen aufzubewahren, sondern sie können auf engerem Raum versorgt werden. Das Auffinden der gewünschten CD stellt kein Problem dar, da der gesamte CD Besitzstand katalogisiert und recherchierbar vorliegt.

Die Erstellung und Aufrechterhaltung einer Datenbank über verschiedene CDs auf einem Heimcomputer erfordert die Eingabe der gewünschten Informationen zu den einzelnen Musikstücken in das Datenbankprogramm eines Computers. Diese Dateneingabe ist derzeit nur durch manuelles Abtippen der auf den Verpackungen enthaltenen Informationen möglich, was eine mühevolle und zeitaufwendige Tätigkeit darstellt.

Im Rahmen der vorliegenden Erfindung wird erstmals beschrieben, alle oder zumindest einen Teil der Textinformationen, welche der Verpackung einer Musik-CD beigefügt sind, wie z.B. den Titel der CD, die einzelnen Liedertitel, die Position eines Musikstücks auf der CD sowie seine Dauer und/oder die Namen des oder der Interpreten ebenfalls auf der CD abzuspeichern, wobei für die Speicherung der Daten ein Dateiformat vorgeschlagen wird, das es gestattet, die Textinformationen in den Speicher eines Heimcomputers einzulesen und als Text auf einem Bildschirm oder Drucker wiederzugeben, das heisst sie auf einem Heimcomputer zu verarbeiten.

Ein Dateiformat stellt eine Richtlinie dar, die festlegt, welche Bereiche einer Datei für welchen Zweck dienen und in welcher Reihenfolge die Daten abgelegt werden. Nicht jedes Dateiformat kann von einem Anwendungsprogramm verarbeitet werden. Es ist deshalb nötig, die gewünschten Textinformationen auf der CD in einem geeigneten Dateiformat abzulegen. Bevorzugt sind Dateiformate, die von herkömmlichen Anwendungsprogrammen verarbeitet werden können. Geeignete Dateiformate sind deshalb Formate, welche von kommerziell erwerblichen Textverarbeitungs-, Tabellenkalkulations- oder Datenbankprogrammen zur Speicherung von Daten als Daten-Files verwendet werden. Beispiele für solche Dateiformate sind das ASCII Format oder das Rich Text Format aber auch die von den Textverarbeitungsprogrammen Microsoft Word, Word Perfect, oder Write verwendeten Formate. Ebenso verwendet werden können die von den Tabellenkalkulationsprogrammen Excel, Symphony, oder Quattro Plus bzw. die von den Datenbankprogrammen Access, Claris oder Oracle verwendeten Formate.

Eine äquivalente Vorgehensweise bestünde auch darin, ein eigenes Datenbankprogramm zur Verwaltung von Musik-CDs zu entwickeln, und dann die gewünschten Informationen auf der Musik-CD in dem Format abzuspeichern, welches von diesem Programm verwendet wird.

Gegenstand der vorliegenden Erfindung sind somit Compact Disks (CDs) wie Mixed Mode CDs oder äquivalente Datenträger zur akustischen Wiedergabe digital gespeicherter Musikstücke, dadurch gekennzeichnet, daß auf den CDs zusätzliche Textinformationen zu den Musiktiteln in einem Dateiformat abgespeichert sind, das es gestattet, die Textinformationen direkt von einem CD-ROM Laufwerk in den Speicher eines Heimcomputers einzulesen und als Text auf einem Bildschirm oder Drucker wiederzugeben. Diese CDs können auf herkömmliche Weise hergestellt werden, indem die zusätzlichen Textinformationen auf der CD in einem Dateiformat abgespeichert werden, das es gestattet, die Textinformationen in den Speicher eines Heimcomputers einzulesen und als Text auf einem Bildschirm oder Drucker wiederzugeben.

Die Erfindung wird nachstehend durch ein spezifisches Ausführungseispiel illustriert. In analoger Weise können gewünschte Textinformationen auch für andere Musik-CDs erfaßt werden.

### Beispiel 1:

Von der Musik-CD mit dem Titel ,,Through the Eyes of Love" von Randy Crawford wird eine Mixed-Mode CD hergestellt, in deren Audio-Track Nr. 1 ein Text-File abgelegt wird, daß vom Textverarbeitungsprogramm Microsoft Word in einen Heimcomputer eingelesen werden kann und die folgende Tabelle 1 umfaßt. In den übrigen Tracks werden die Musikstücke der CD abgespeichert.

**Tabelle 1**

| **Lied** | **Titel** | **Dauer** | **Interpreten** | **CD Titel** |
|---|---|---|---|---|
| 1 | Who's Crying Now | 4:32 | Randy Crawford | Through the Eyes of Love |
| 2 | It's Raining | 5:07 | Randy Crawford | Through the Eyes of Love |
| 3 | When Love is New | 4:40 | Randy Crawford | Through the Eyes of Love |
| 4 | If I Were (in Your Shoes) | 3:50 | Randy Crawford | Through the Eyes of Love |
| 5 | Rhythm of Romance | 4:16 | Randy Crawford | Through the Eyes of Love |
| 6 | Shine | 4:56 | Randy Crawford | Through the Eyes of Love |
| 7 | Hold On, Be Strong | 4:05 | Randy Crawford | Through the Eyes of Love |
| 8 | A Lot That You Can Do | 5:01 | Randy Crawford | Through the Eyes of Love |
| 9 | If You'd Only Believe | 5:17 | Randy Crawford | Through the Eyes of Love |
| 10 | Like the Sun Out of Nowhere | 3:14 | Randy Crawford | Through the Eyes of Love |
| 11 | Just a Touch | 3:31 | Randy Crawford | Through the Eyes of Love |
| 12 | Diamante | 4:41 | Zucchero, Randy Crawford | Through the Eyes of Love |

Die erhaltene CD kann mit einem herkömmlichen CD Player abgespielt werden. Die CD kann jedoch auch in ein CD-ROM Laufwerk eingelegt werden, um das abgespeicherte Text-File mit Hilfe des Textverarbeitungsprogramms Microsoft Word in einen Heimcomputer einzulesen. Die Daten können dann z.B. in das Tabellenkalkulationsprogramm Microsoft Excel oder in das Datenbankprogramm Microsoft Access oder auch andere Programme kopiert werden, um sie in gewünschter Form zentral zu erfassen. Es ist nicht mehr nötig die Daten manuell einzugeben.

### Beispiel 2:

Von der Musik-CD mit dem Titel ,,Through the Eyes of Love" von Randy Crawford wird eine Mixed-Mode CD im Format einer CD-Extra hergestellt, welche ein Text-File mit den in Tabelle 1 widergebenen Informationen enthält, welches seinerseits vom Textverarbeitungsprogramm Microsoft Word in einen Heimcomputer eingelesen werden.

Die erhaltene CD kann mit einem herkömmlichen CD Player abgespielt werden. Die CD kann jedoch auch in ein CD-ROM Laufwerk eingelegt werden, um das abgespeicherte Text-File mit Hilfe des Textverarbeitungsprogramms Microsoft Word in einen Heimcomputer einzulesen. Die Daten können dann z.B. in das Tabellenkalkulationsprogramm Microsoft Excel oder in das Datenbankprogramm Microsoft Access oder auch andere Programme kopiert werden, um sie in gewünschter Form zentral zu erfassen. Es ist nicht mehr nötig die Daten manuell einzugeben.

## Patentansprüche

1. Compact Disk (CD) zur akustischen Wiedergabe gespeicherter Musiktitel, dadurch gekennzeichnet, daß auf der CD Textinformationen zu den Musiktiteln in einem Dateiformat abgespeichert sind, welches einem Anwendungsprogramm die Verarbeitung dieser Textinformationen auf einem Heimcomputer ermöglicht.

2. Compact Disk gemäß Anspruch 1, dadurch gekennzeichnet, daß die abgespeicherten Textinformationen direkt von einem CD-ROM Laufwerk in den Speicher eines Heimcomputers eingelesen und als Text auf einem Bildschirm oder Drucker wiedergeben werden können.

3. CD gemäß Anspruch 1, dadurch gekennzeichnet, daß es sich bei besagtem Anwendungsprogramm um ein Textverarbeitungs-, Tabellenkalkulations- oder Datenbankprogramm handelt.

4. Verfahren zur Herstellung einer CD gemäß Anspruch 1, dadurch gekennzeichnet, daß Textinformationen zu den Musiktiteln auf der CD in einem Dateiformat abgespeichert werden, welches einem Anwendungsprogramm die Verarbeitung dieser Textinformationen auf einem Heimcomputer ermöglicht.

5. Verwendung einer CD zur gleichzeitigen Abspeicherung von Musikinformationen und dazugehörigen Textinformationen, dadurch gekennzeichnet, dass die Textinformationen in einem Dateiformat abgespeichert sind, welches einem Anwendungsprogramm die Verarbeitung dieser Textinformationen auf einem Heimcomputer ermöglicht.

6. Verfahren zur Eintragung von Datensätzen in eine Datenbank, welche Textinformationen zu den auf CDs gespeicherten Musiktiteln erfaßt, dadurch gekennzeichnet, daß die auf einer CD gemäss Anspruch 1 gespeicherten Textinformationen mit Hilfe eines CD-ROM Laufwerks in den Speicher eines Heimcomputers eingelesen und anschließend in besagte Datenbank übertragen werden.
